# EUROPEAN PATENT APPLICATION

(11) **EP 3 335 901 A1**
(43) Date of publication of application: **20.06.2018**
(21) Application number: 17178559.5
(22) Date of filing: 29.06.2017
(51) Int. Cl.: B60B 5/02, B60B 21/08

(54) **CARBON FIBER WHEEL RIM AND METHOD OF MANUFACTURING THE SAME**

(30) Priority: 19.12.2016 TW 105142094
(71) Applicant: Giant Manufacturing Co., Ltd., Taichung City 437 (TW)
(72) Inventor: LO, Chi-Wei, 421 Taichung City (TW); CHANG, Chih-Kai, 407 Taichung City (TW)
(74) Representative: Lang, Christian

(57) **Abstract**

A carbon fiber wheel rim (100) is disclosed. The carbon fiber wheel rim (100) has corresponding surfaces disposed in use between two braking elements, and includes a rim body and a reinforcing layer (120). The rim body is made of a carbon fiber composites material. The reinforcing layer is disposed on a surface of the rim body, wherein the reinforcing layer is made of a fibrous veil having an isotropy.

## Description

### BACKGROUND

### Technical Field

The present disclosure relates to a wheel rim and a method of manufacturing the wheel rim. More particularly, the present disclosure relates to a carbon fiber wheel rim and a method of manufacturing the carbon fiber wheel rim.

### Description of Related Art

Carbon fiber composites material have material characteristics of high strength and low specific density. These days, the carbon fiber composites materials have gradually become the materials used in various structural parts as well as the driving elements applied in related vehicles in order to achieve weight reduction. For example, wheel rims of bicycles are suitable for using the carbon fiber composites material, and this has become a mainstream of the high-performance bicycle market.

The carbon fiber composites material is mainly composed of a combination of a fiber material and a polymer material. High temperature state caused by external braking energy soften the carbon fiber composites material with damage of the polymer material and reduce overall structure strength. Accordingly, structure of an element made of the polymer material cannot sustain its load and impact may have accidental destruction.

In addition, braking abrasion resistance of the carbon fiber composites material is reduced under high temperature state. When the carbon fiber composites material used in a wheel rim have been soften by a braking element for a long time with the high temperature is also less abrasion resistant. Therefore, the lifetime of the wheel rim will be decreased.

There are carbon fiber bicycle wheel rims in the market having coated or embedded temperature and abrasion resistant particles made of metal or ceramic for enhancing the abrasion resistance of the carbon fiber wheel rim. However, the temperature and abrasion resistant particles are easy to peel off thereby lost effectiveness. Coating or embedding the temperature and abrasion resistant particles will also increase an overall weight of the carbon fiber wheel rim. Furthermore, the production cost of this kind of carbon fiber wheel rim is remarkably increased because of a complicated forming process. Further, another carbon fiber bicycle wheel rim with good heat dissipation existing in the current market covered with a metal-coated woven fabric on the braking side of the wheel rim for enhancing the thermal conductivity. However, the weaving cloth significantly increases the weight of the carbon fiber wheel rim, and an orientation of the woven fabric causes anisotropic heat conduction characteristic. Furthermore, the operation cost of such carbon fiber wheel rim is significantly increased because of taking into account the orientation of the woven fabric.

### SUMMARY

According to one aspect of the present disclosure, a carbon fiber wheel rim is provided. The carbon fiber wheel rim is corresponding disposed between two braking elements, and includes a rim body and at least one reinforcing layer. The rim body is made of a carbon fiber composites material. The reinforcing layer is disposed on a surface of the rim body, wherein the reinforcing layer is made of an isotropic fibrous veil, and its thickness ranges from 0.05 mm to 2 mm.

In one example, the carbon fiber wheel rim further includes two braking portions disposed at an interval on the rim body, wherein two reinforcing layers are respectively disposed on surfaces of the two braking portions corresponding to the two braking elements.

In one example, a fiber length of the fibrous veil ranges from 1 mm to 25 mm.

In one example, the fibrous veil is composed of a plurality of pure carbon fibers.

In one example, the fibrous veil is composed of a plurality of metal-coated carbon fibers.

In one example, the metal-coated carbon fibers are nickel-coated carbon fibers.

In one example, a nickel content of the nickel-coated carbon fiber ranges from 10 weight percent to 65 weight percent.

In one example, the fibrous veil is composed of a plurality of the pure carbon fibers mixed with a plurality of the metal-coated carbon fibers, a content of the pure carbon fibers is more than 0% and less than 100%, and a content of the metal-coated carbon fibers is more than 0% and less than 100%.

In one example, the fibrous veil is composed of a plurality of fibers in different orientations.

According to another aspect of the present disclosure, a method of manufacturing the carbon fiber wheel rim includes steps as follows. An isotropic fibrous veil is provided, wherein a thickness of the fibrous veil ranges from 0.05 mm to 2 mm. The fibrous veil together with carbon fiber composites material for making a rim body are laid in a rim mold. The fibrous veil and the carbon fiber composites material are heated and solidified to form the carbon fiber wheel rim.

In one example, the fibrous veil is composed of a plurality of fibers in different orientations.

In one example, the fibrous veil is composed of a plurality of pure carbon fibers.

In one example, the fibrous veil is composed of a plurality of metal-coated carbon fibers.

In one example, the metal-coated carbon fibers are nickel-coated carbon fibers.

In one example, the fibrous veil is composed of a plurality of the pure carbon fibers mixed with a plurality of the metal-coated carbon fibers, a content of the pure carbon fibers is more than 0% and less than 100%, and a content of the metal-coated carbon fibers is more than 0% and less than 100%.

### BRIEF DESCRIPTION OF THE DRAWINGS

The present disclosure can be more fully understood by reading the following detailed description of the embodiment, with reference made to the accompanying drawings as follows:
Fig. 1 is a 3-D sectional view of a carbon fiber wheel rim according to one embodiment of the present disclosure;
Fig. 2 is a plane sectional view of the carbon fiber wheel rim of Fig. 1;
Fig. 3 is a 3-D sectional view of the carbon fiber wheel rim according to another embodiment of the present disclosure;
Fig. 4 is a plane sectional view of the carbon fiber wheel rim of Fig. 3; and
Fig. 5 is a flow diagram showing a method of manufacturing the carbon fiber wheel rim according to yet another embodiment of the present disclosure.

### DETAILED DESCRIPTION

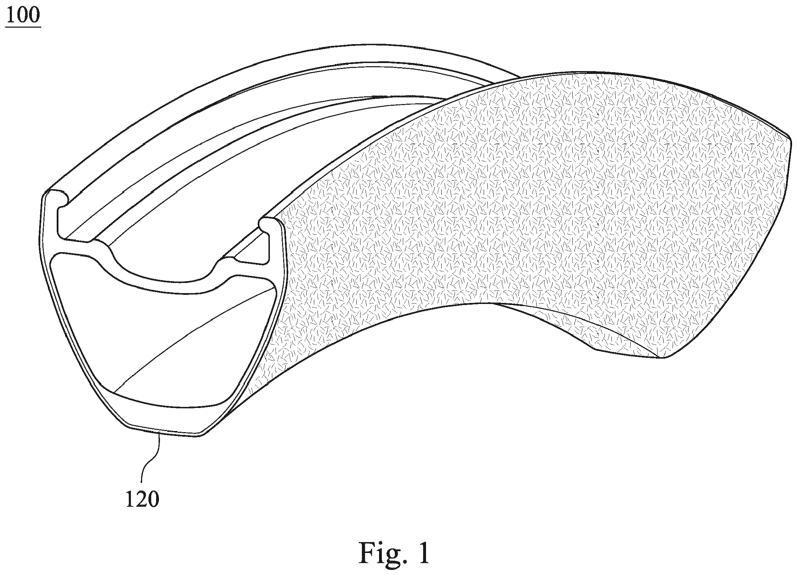

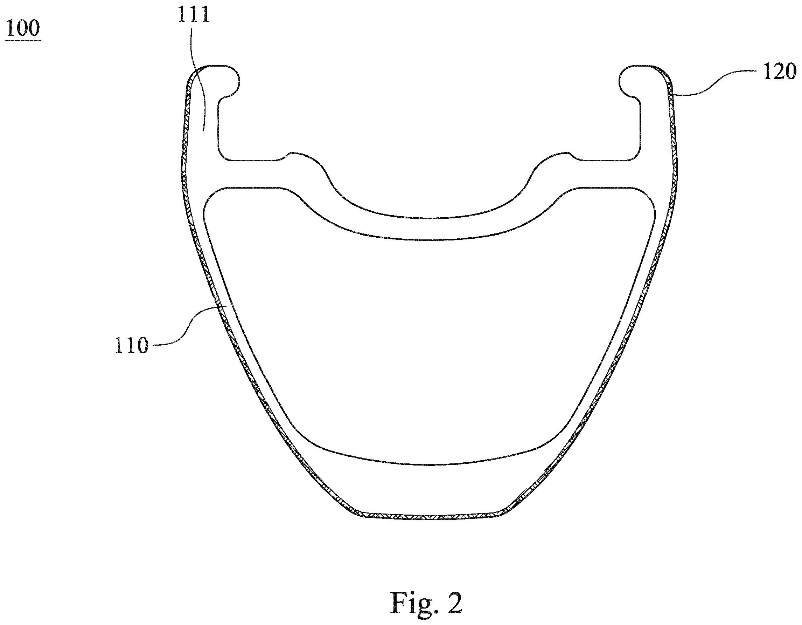

Fig. 1 is a 3-D sectional view of a carbon fiber wheel rim 100 according to one embodiment of the present disclosure. Fig. 2 is a plane sectional view of the carbon fiber wheel rim 100 of Fig. 1. In Figs. 1 and 2, the carbon fiber wheel rim 100 is provided to be used on bicycles, where the carbon fiber wheel rim 100 is corresponding disposed between two braking elements (not shown). The carbon fiber wheel rim 100 includes a rim body 110 and a reinforcing layer 120.

The rim body 110 is made of a carbon fiber composites material. The rim body 110 mainly includes a fiber material with high strength and a polymer material providing interfiber adhesion.

The reinforcing layer 120 is disposed on a surface of the rim body 100, wherein the reinforcing layer 120 is made of a fibrous veil having isotropy, and thickness of the fibrous veil ranges from 0.05 mm to 2 mm. The term "isotropy" means that property like stiffness and strength of a fibrous veil material with its fibers randomly and uniformly dispersed in all directions. The fibrous veil used for the reinforcing layer 120 has uniformity in per unit area weight and thickness, and the randomly distributed fibers have no specific directionality. In more details, fiber length of the fibrous veil used for the reinforcing layer 120 can range from 1 mm to 25 mm, preferably can range from 3 mm to 6 mm. The weight of the fibrous veil can range from 3 g/m² to 40 g/m². The fibrous veil can be composed of a plurality of pure carbon fibers, a plurality of metal-coated carbon fibers, a plurality of the pure carbon fibers mixed with a plurality of the metal-coated carbon fibers, or a plurality of the pure carbon fibers mixed with metal fibers, ceramic fibers (such as silicon carbide fibers), inorganic fibers (such as glass fibers), mineral fibers (such as basalt fibers) or thermoplastic fibers (such as nylon fibers). Further, the fibrous veil can include abrasion resistant particles such as metal particles, ceramic particles and mineral particles, for example, SiC particles, Al₂O₃ particles and SiO₂ particles. When the fibrous veil is composed of a plurality of the pure carbon fibers mixed with a plurality of the metal-coated carbon fibers, content of the pure carbon fibers can be more than 0% and less than 100%, and a content of the metal-coated carbon fibers can be more than 0% and less than 100%. The metal-coated carbon fiber can be a nickel-coated carbon fiber, and a nickel content of the nickel-coated carbon fiber can range from 10 weight percent to 65 weight percent.

According to aforementioned embodiment, abrasion resistance and thermal conductivity of the carbon fiber wheel rim 100 can be increased by disposing the reinforcing layer 120 on the surface of the rim body 110. Moreover, the fibrous veil used for the reinforcing layer 120 can block a direct contact between the tacky carbon fiber composites material and the hot rim during molding, thereby promote the air venting and contribute to the appearance quality of the carbon fiber wheel rim 100 produced thereof. The fibrous veil has a uniform texture and consistent appearance, hence the fibrous veil can cover surface defects of the underlying carbon fiber composites material to significantly improve yield rate of the carbon fiber wheel rim 100. Therefore, the carbon fiber wheel rim according to this embodiment can solve problems of the increased cost caused by subsequent repair and scrap of defective carbon fiber wheel rims in the conventional production, which are frequently resulting from surface local defects and the entrapped air in the carbon fiber composites material during the forming process.

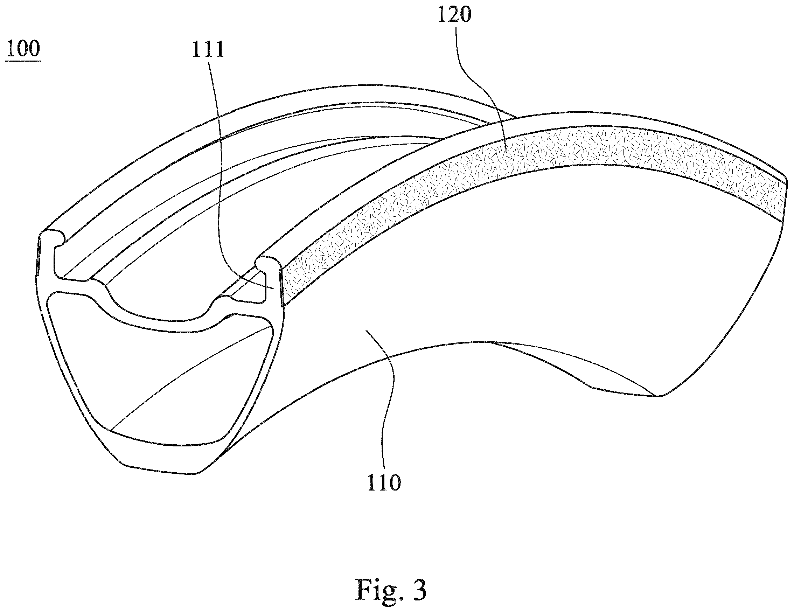

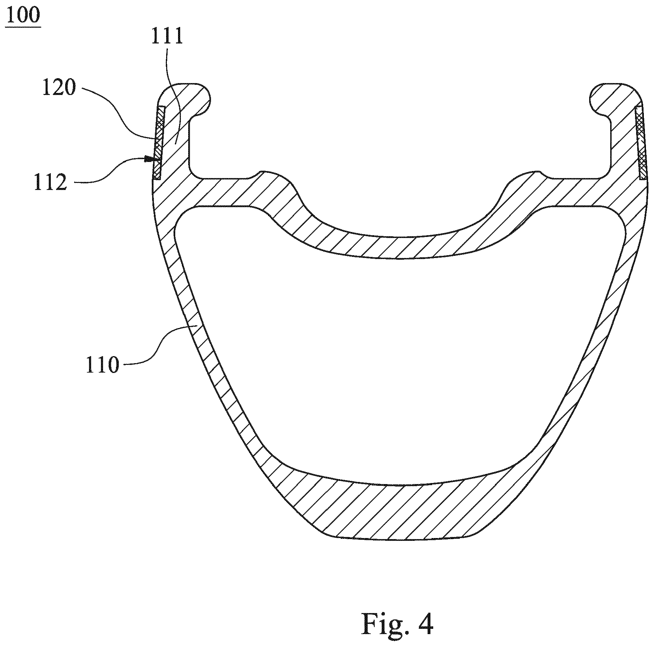

Fig. 3 is a 3-D sectional view of a carbon fiber wheel rim according to another embodiment of the present disclosure. Fig. 4 is a plane sectional view of the carbon fiber wheel rim of Fig. 3. In Figs. 3 and 4, the carbon fiber wheel rim 100 is provided to be used on the bicycles, where the carbon fiber wheel rim 100 is corresponding disposed between two braking elements (not shown). The carbon fiber wheel rim 100 includes a rim body 110 and two reinforcing layers 120.

The rim body 110 is made of carbon fiber composites material mainly including the fiber material with high strength and the polymer material that provides the interfiber adhesion. The rim body 110 further includes two braking portions 111 disposed at an interval.

The two reinforcing layers 120 are respectively disposed on surfaces 112 of the two braking portions 111 corresponding to the two braking elements. Each of the reinforcing layers 120 is made of the fibrous veil having the isotropy, and the thickness of the fibrous veil ranges from 0.05 mm to 2 mm. The term "isotropy" means that property like stiffness and strength of the material comes from the fibers randomly dispersed in the fibrous veil is uniform in all orientations. The fibrous veil used for the reinforcing layer 120 has uniformity in per unit area weight and thickness, and the randomly distributed fibers have no specific directionality. In more details, fiber length of the fibrous veil used for the reinforcing layer 120 can range from 1 mm to 25 mm, preferably can range from 3 mm to 6 mm. The weight of the fibrous veil can range from 3 g/m² to 40 g/m². The fibrous veil can be composed of a plurality of the pure carbon fibers, a plurality of the metal-coated carbon fibers, a plurality of the pure carbon fibers mixed with a plurality of the metal-coated carbon fibers, or a plurality of the pure carbon fibers mixed with the metal fibers, ceramic fibers (such as silicon carbide fibers), the inorganic fibers (such as glass fibers), the mineral fibers (such as basalt fibers) or thermoplastic fibers (such nylon fibers). Further, the fibrous veil can include abrasion resistant particles such as metal particles, ceramic particles and mineral particles, for example, SiC particles, Al₂O₃ particles and SiO₂ particles. When the fibrous veil is composed of a plurality of the pure carbon fibers mixed with a plurality of the metal-coated carbon fibers, the content of the pure carbon fibers can be more than 0% and less than 100%, and the content of the metal-coated carbon fibers can be more than 0% and less than 100%. The metal-coated carbon fiber can be the nickel-coated carbon fiber, and the nickel content of the nickel-coated carbon fiber can range from 10 weight percent to 65 weight percent.

According to aforementioned embodiment, each of the reinforcing layer 120 is disposed on each surface 112 of each braking portion 111 corresponding to the braking elements, respectively, the reinforcing layer 120 can increase the abrasion resistance of the carbon fiber wheel rim 100. If the fibrous veil used for the reinforcing layer 120 includes the metal-coated carbon fibers, the thermal conductivity of the carbon fiber wheel rim 100 can be further improved to avoid a destruction of the material of the rim body 110 caused by the sustained high temperature. In addition, the fibrous veil used for the reinforcing layer 120 is light and thin, hence there is no influence on the overall weight of the carbon fiber wheel rim 100.

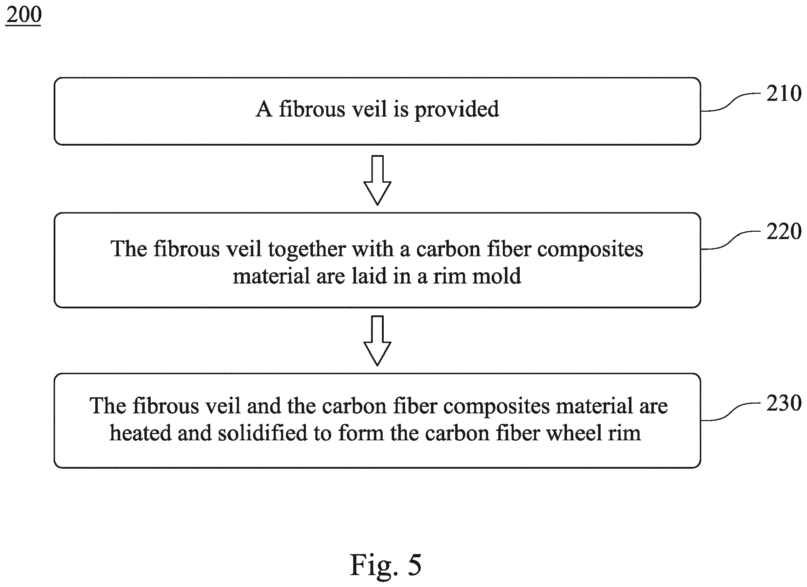

Fig. 5 is a flow diagram showing a method 200 of manufacturing the carbon fiber wheel rim according to yet another embodiment of the present disclosure, which is used for manufacturing the carbon fiber wheel rim 100 in Fig. 1 or Fig. 3. The method 200 of manufacturing the carbon fiber wheel rim includes a step 210, a step 220 and a step 230.

In step 210, the fibrous veil having isotropy is provided, wherein the thickness of the fibrous veil ranges from 0.05 mm to 2 mm. The fibrous veil used for the reinforcing layer 120 has uniformity in per unit area weight and thickness, and the fibers are randomly distributed having no specific directionality. In more details, the fiber length of the fibrous veil used for the reinforcing layer 120 can range from 1 mm to 25 mm, preferably can range from 3 mm to 6 mm. The weight of the fibrous veil can range from 3 g/m² to 40 g/m². The fibrous veil can be composed of a plurality of pure carbon fibers, a plurality of metal-coated carbon fibers, a plurality of pure carbon fibers mixed with a plurality of metal-coated carbon fibers, or a plurality of the pure carbon fibers mixed with metal fibers, ceramic fibers (such as silicon carbide fibers), inorganic fibers (such as glass fibers), mineral fibers (such as basalt fibers) or thermoplastic fibers (such nylon fibers). Further, the fibrous veil can include the abrasion resistant particles such as metal particles, ceramic particles and mineral particles, for example, SiC particles, Al₂O₃ particles and SiO₂ particles. When the fibrous veil is composed of a plurality of pure carbon fibers mixed with a plurality of metal-coated carbon fibers, the content of the pure carbon fibers can be more than 0% and less than 100%, and the content of the metal-coated carbon fibers can be more than 0% and less than 100%. The metal-coated carbon fiber can be nickel-coated carbon fiber, and the nickel content of nickel-coated carbon fiber can range from 10 weight percent to 65 weight percent.

In step 220, the fibrous veil is covered on the braking portions 111 of the rim body 110, or the fibrous veil together with the carbon fiber composites material for making the rim body 110 are laid in a rim mold. The carbon fiber composites material mainly includes the fiber material with high strength and the polymer material that provides the interfiber adhesion.

In step 230, the fibrous veil and the carbon fiber composites material are heated and solidified to form the carbon fiber wheel rim 100. The fibrous veil is tightly covered on a surface of the carbon fiber composites material to form an integrally formed carbon fiber wheel rim 100.

In the method 200 of manufacturing the carbon fiber wheel rim of the present disclosure, the fibrous veil used is isotropic without specific directionality. Therefore, it only need a simple attachment process and does not need to take into account the directions of the fiber texture of the fibrous veil during the production of the carbon fiber wheel rim 100, thereby the operation cost does not increase too much.

### <EXAMPLES>

In order to test how much the abrasion resistance can be increased resulted from the reinforcing layer 120 of the present disclosure, a bicycle brake shoe is used as an abrasive, and a test specimen of the carbon fiber composites material covered the reinforcing layer 120 of the present disclosure is used as a material to be worn in this test. The high-temperature wear testing conditions are load of 10 kg, speed at 180 times/min and temperature at 120 °C by using a high temperature tribometer. The control base specimen is uncovered with the reinforcing layer. Examples 1-4 use the carbon fiber composites material covered with the reinforcing layer 120 as the test specimens. In Example 1, the reinforcing layer 120 is made of one layer of the fibrous veil, wherein the fibrous veil is composed of 25% nickel-coated carbon fibers mixed with 75% pure carbon fibers, and the weight of each layer of the fibrous veil is 5 g/m². In Example 2, the reinforcing layer 120 is made of two layer of the fibrous veil, wherein the fibrous veil is composed of 25% nickel-coated carbon fibers mixed with 75% pure carbon fibers, and the weight of the fibrous veil is 5 g/m². In Example 3, the reinforcing layer 120 is made of one layer of the fibrous veil, wherein the fibrous veil is composed of 100% nickel-coated carbon fibers, and the weight of the fibrous veil is 10 g/m². In Example 4, the reinforcing layer 120 is made of one layer of the fibrous veil, wherein the fibrous veil is composed of 100% pure carbon fibers, and the weight of the fibrous veil is 10 g/m². The results of the high-temperature wear testing are shown in Table 1 as followed.

**Table 1 - The results of the high-temperature wear testing**

| Group | Reinforcing layer | | | Worn through cycles |
|---|---|---|---|---|
| | The composition of the fibrous veil | Weight (g/m²) | Number of layers | |
| Control | - | - | - | 1200-1350 |
| Example 1 | 25% nickel-coated carbon fibers mixed with 75% pure carbon fibers | 5 | 1 | 2500-2800 |
| Example 2 | 25% nickel-coated carbon fibers mixed with 75% pure | 5 | 2 | 4000-4200 |
| | carbon fibers | | | |
| Example 3 | 100% nickel-coated carbon fibers | 10 | 1 | 4000-4200 |
| Example 4 | 100% pure carbon fibers | 10 | 1 | 4000 |

The results of the high-temperature wear testing indicate that the worn through cycle increases from 1200-1350 to 2500-2800 in Example1. In Examples 2, 3 and 4, the worn through cycle increases from 1200-1350 to 4000-4200. It indicates that the reinforcing layer 120 of the present disclosure can remarkably improve the abrasion resistance of the composites material. As shown in Table 1, the abrasion resistance of the composites material is getting better with increasing the number of layers of the fibrous veil or because of the nickel coated carbon fiber, but it may increase the overall weight of the carbon fiber wheel rim 100. Therefore, the pure carbon fibers and nickel-coated carbon fibers can be mixed in different proportions to achieve optimum results in the present disclosure.

In addition, the high temperature braking capacity between 150 °C and 300 °C of the carbon fiber wheel rim 100 of the present disclosure and the carbon fiber wheel rim uncovered with the reinforcing layer are further compared. The reinforcing layer 120 used in this test is made of the fibrous veil composed of 100% nickel-coated carbon fibers with weight of 10 g/m². According to the test result, the high-temperature braking capacity of the carbon fiber rim 100 of the present disclosure can be improved more than six times compared with the carbon fiber wheel rim uncovered with the reinforcing layer in comparison with the same amount of thermal deformation and surface wear degree.

As known from the above embodiments, the carbon fiber wheel rim and the method of manufacturing the same of the present disclosure include the following advantages.

1. Disposing the reinforcing layer on the surfaces of the braking portions corresponding to the braking elements can enhance the abrasion resistance of the carbon fiber wheel rim under high temperature state above 120 °C resulted from braking thereby maintain good braking capability. Furthermore, if the fibrous veil used for the reinforcing layer includes the metal-coated carbon fibers, the thermal conductivity of the carbon fiber wheel rim can be further improved to avoid destruction of the material of the rim body caused by the sustained high temperature.

2. The fibrous veil used for the reinforcing layer is light and thin, and an outflow rate of resin can be increased by surface permeability which eliminates the added veil weight of the carbon fiber wheel rim. Therefore, there is almost no influence on the overall weight of the carbon fiber wheel rim. Moreover, because the fibrous veil is dry without tack, it can further increase the resin outflow by avoiding the direct contact between the tacky carbon fiber composites material and the hot rim mold. Accordingly, the overall weight of the carbon fiber wheel rim is even decreased.

3. The operation process is simple. Because the fibrous veil used for the reinforcing layer is isotropic, manufacture of carbon fiber wheel rim does not need to take into account the direction of the fiber orientation and only need to attach the fibrous veil to the surface of the carbon fiber composites material during molding without follow-up process.

## Claims

1. A carbon fiber wheel rim (100) corresponding disposed between two braking elements, comprising:
a rim body (110) made of a carbon fiber composites material; and
at least one reinforcing layer (120) disposed on a surface of the rim body, wherein the reinforcing layer is made of a fibrous veil having an isotropy, and a thickness of the fibrous veil ranges from 0.05 mm to 2 mm.

2. The carbon fiber wheel rim of claim 1, further comprising:
two braking portions (111) disposed at an interval on the rim body, wherein two reinforcing layers are respectively disposed on surfaces (112) of the two braking portions corresponding to the two braking elements.

3. The carbon fiber wheel rim of claim 1, wherein a fiber length of the fibrous veil ranges from 1 mm to 25 mm.

4. The carbon fiber wheel rim of claim 1, wherein the fibrous veil is composed of a plurality of pure carbon fibers.

5. The carbon fiber wheel rim of claim 1, wherein the fibrous veil is composed of a plurality of metal-coated carbon fibers.

6. The carbon fiber wheel rim of claim 5, wherein the metal-coated carbon fibers are nickel-coated carbon fibers.

7. The carbon fiber wheel rim of claim 6, wherein a nickel content of the nickel-coated carbon fiber ranges from 10 weight percent to 65 weight percent.

8. The carbon fiber wheel rim of claim 1, wherein the fibrous veil is composed of a plurality of the pure carbon fibers mixed with a plurality of the metal-coated carbon fibers, a content of the pure carbon fibers is more than 0% and less than 100%, and a content of the metal-coated carbon fibers is more than 0% and less than 100%.

9. The carbon fiber wheel rim of claim 1, wherein the fibrous veil is composed of a plurality of fibers in different orientations.

10. A method (200) of manufacturing a carbon fiber wheel rim, comprising:
providing a fibrous veil having an isotropy (210), wherein a thickness of the fibrous veil ranges from 0.05 mm to 2 mm;
laying the fibrous veil together with a carbon fiber composites material for making a rim body in a rim mold (220); and
heating and solidifying the fibrous veil and the carbon fiber composites material to form the carbon fiber wheel rim (230).

11. The method of manufacturing the carbon fiber wheel rim of claim 10, wherein the fibrous veil is composed of a plurality of fibers in different orientations.

12. The method of manufacturing the carbon fiber wheel rim of claim 10, wherein the fibrous veil is composed of a plurality of pure carbon fibers.

13. The method of manufacturing the carbon fiber wheel rim of claim 10, wherein the fibrous veil is composed of a plurality of metal-coated carbon fibers.

14. The method of manufacturing the carbon fiber wheel rim of claim 13, wherein the metal-coated carbon fibers are nickel-coated carbon fibers.

15. The method of manufacturing the carbon fiber wheel rim of claim 10, wherein the fibrous veil is composed of a plurality of the pure carbon fibers mixed with a plurality of the metal-coated carbon fibers, a content of the pure carbon fibers is more than 0% and less than 100%, and a content of the metal-coated carbon fibers is more than 0% and less than 100%.

16. The method of manufacturing the carbon fiber wheel rim of claim 15, wherein the metal-coated carbon fibers are the nickel-coated carbon fibers.
